# EUROPÄISCHE PATENTANMELDUNG

(11) **EP 0 952 653 A2**
(43) Veröffentlichungstag der Anmeldung: **27.10.1999**
(21) Anmeldenummer: 99107584.7
(22) Anmeldetag: 15.04.1999
(51) Int. Cl.: H02H 3/347

(54) **Versagerschutz für ein Schutzschaltgerät**

(30) Priorität: 22.04.1998 DE 19818022
(71) Anmelder: SIEMENS AKTIENGESELLSCHAFT, 80333 München (DE)
(72) Erfinder: Schmid, Reinhard Dipl.Ing.(Univ.), 93051 Regensburg (DE)

(57) **Zusammenfassung**

Zur Erhöhung der Zuverlässigkeit eines Schutzschaltgerätes, insbesondere eines Fehlerstrom-Schutzschalters, ist diesem ein Versagerschutz (2) zugeordnet, der ein Schmelzleitersystem mit mindestens einem Schmelzleiter (27 bis 29) in jedem Phasenleiter (L1,L2,L3) eines vom Schutzschaltgerät (1) überwachten Leiternetzes (Ln) sowie ein Schaltersystem (30 bis 35) mit einem Nebenschlußschalter (30,31,32) für den Schmelzleiter (27 bis 29) jedes Phasenleiters (L1,L2,L3) umfaßt. Zur Ansteuerung des Schaltersystems (30 bis 35) ist dieses mit einem Auslöser (25) gekoppelt, der ebenfalls vom überwachten Leiternetz (Ln) gespeist ist.

## Beschreibung

Die Erfindung bezieht sich auf einen Versagerschutz für ein Schutzschaltgerät, insbesondere für einen Fehlerstrom- oder Differenzstrom-Schutzschalter.

Ein derartiger Schutzschalter dient zur Sicherstellung des Schutzes gegen einen gefährlichen Körperstrom in einer elektrischen Anlage. Dies ist beispielsweise dann der Fall, wenn eine Person ein spannungsführendes Teil einer elektrischen Anlage berührt. Der Fehlerstrom fließt dann über die Person als Körperstrom gegen Erde ab. Der zum Schutz gegen gefährliche Körperströme eingesetzte Schutzschalter trennt bei (Überschreiten des sogenannten Bemessungsfehlerstromes sicher und schnell die betroffenen Stromkreise vom Netz.

Der Aufbau eines derartigen Schutzschalters ist beispielsweise aus 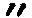 etz", Band 107 (1986), Heft 20, Seiten 938 bis 945, bekannt. Dort sind insbesondere in den Bildern 1 bis 3 der prinzipielle Aufbau und das Funktionsprinzip eines Differenzstrom-Schutzschalters (DI-Schutzschalter) und eines Fehlerstrom-Schutzschalters (FI-Schutzschalter) dargestellt. Der DI- und der FI-Schutzschalter sind in ähnlicher Art und Weise aus drei Baugruppen aufgebaut. Ein Summenstromwandler, durch dessen Wandlerkern alle stromführenden Leiter eines Leiternetzes geführt sind, induziert in dessen Sekundärwicklung im Falle eines Fehlerstroms ein Spannungssignal, das einen mit der Sekundärwicklung verbundenen Auslösekreis ansteuert. Der Auslösekreis ist seinerseits über eine Auslöserelaisspule (Auslöser) mit einem Schaltschloß gekoppelt, über das bei Ansteuerung des Auslösers die Kontakte oder Schaltstrecken eines in den Netzleitungen liegenden Leistungsschalters geöffnet werden. Dazu entnimmt der DI-Schutzschalter die zur Auslösung notwendige Energie netzspannungsabhängig aus einem vom Leiternetz gespeisten Netzteil, während der FI-Schutzschalter die zur Auslösung notwendige Energie netzspannungsunabhängig aus dem Fehlerstrom selbst entnimmt.

Zur Überprüfung der Funktionsfähigkeit eines derartigen Schutzschaltgerätes oder Schutzschalters ist eine Prüfeinrichtung mit einem Prüftaster vorgesehen, der üblicherweise zwischen dem Nulleiter (N) und einem Phasenleiter (L3) des Leiternetzes geschaltet ist. Durch Drücken der Prüftaste wird ein Fehlerstrom simuliert und die Reaktion des Schutzschalters geprüft. Dabei muß im funktionsfähigen Zustand der Schutzschalter - auch bei einer Fernauslösung - möglichst unverzögert auslösen. Erfolgt bei einem tatsächlichen Fehlerstrom keine Auslösung mit einer Kontaktöffnung des Schutzschalters, so kann dies zu einer Zerstörung der zu schützenden Anlagenteile und damit zu unerwünschten Folgeschäden führen.

Der Erfindung liegt daher die Aufgabe zugrunde, einen Versagerschutz für einen Schutzschalter, insbesondere für einen Fehlerstrom- oder Differenzstrom-Schutzschalter anzugeben, der eine besonders hohe Zuverlässigkeit des Schutzschaltgerätes unabhängig von dessen Baugruppen gewährleistet.

Diese Aufgabe wird erfindungsgemäß gelöst durch die Merkmale des Anspruchs 1. Dazu weist der Versagerschutz ein Schmelzleitersystem mit mindestens einem Schmelzleiter in jedem Phasenleiter des vom Schutzschaltgerät überwachten Leiternetzes sowie ein Schaltersystem mit einem Nebenschlußschalter für den Schmelzleiter jedes Phasenleiters auf. Dabei wird das Schaltersystem von einem separaten Auslöser betätigt, der von einem mit dem Leiternetz gekoppelten Auslösekreis angesteuert ist.

Die Schmelzleiter liegen in jeweils einem Phasen- oder Außenleiter und sind durch die Kontakte der Nebenschlußschalter geshuntet. Diese Kontakte der Nebenschlußschalter führen im Passivbetrieb die Nennströme und auch die durch den Schutzschalter fließenden Kurzschlußströme. Im Aktivbetrieb öffnen sie, bedingt durch die zu diesem Zeitpunkt intakten Schmelzleiter, nahezu schaltleistungslos und die Schmelzleiter übernehmen die Abschaltung der Phasen- oder Außenleiter des Leiternetzes.

In zweckmäßiger Ausgestaltung weist das Schaltersystem für jeden Phasenleiter einen Kurzschlußschalter auf, der in Einspeiserichtung des Leiternetzes hinter dem entsprechenden Schmelzleiter an den Phasenleiter angeschlossen ist. Dabei ist zweckmäßigerweise der oder jeder Kurzschlußschalter über einen Widerstand an den Nulleiter des Leiternetzes angeschlossen. Durch Schließen der Hilfs- oder Kurzschlußschalter und aufgrund des durch die Widerstände definierten Laststroms ist das Abschmelzen der Schmelzleiter unabhängig von den fließenden Last- und Fehlerströmen sichergestellt. Dabei können die Widerstände auch als Kurzschlußleiter ausgeführt sein.

Um die Funktion des Versagerschutzes unabhängig von der Anschlußrichtung des Schutzschalters sicherzustellen, umfaßt das Schmelzleitersystem in jedem Phasenleiter zwei Schmelzleiter, die von dem jeweiligen Nebenschlußschalter gebrückt sind. Dabei ist der jeweilige Kurzschlußschalter zwischen den beiden Schmelzleitern an den Phasenleiter angeschlossen. Dadurch ist unabhängig von der Einspeiserichtung sichergestellt, daß in Einspeiserichtung vor dem Kurzschlußschalter mindestens ein Schmelzleiter liegt.

Die Ansteuerung des Auslösers erfolgt zweckmäßigerweise mittels eines netzspannungsabhängigen Auslösekreises mit einem Netzteil für ein dreiphasiges Netz mit Nulleiter sowie mit einem separaten Summenstromwandler. Alternativ können auch der Summenstromwandler des Versagerschutzes und der Summenstromwandler des Schutzschalters zu einem Summenstromwandler mit zwei Sekundärwicklungen zusammengefaßt sein. Auch kann der Auslösekreis netzspannungsunabhängig, beispielsweise als sogenannte Speicherlösung, ausgeführt sein. In jedem Fall ist der den Auslöser ansteuernde Auslösekreis zweckmäßigerweise derart dimensioniert, daß dessen Auslösezeit bei zwischen einer Auslöseschwelle und einem Fehlerstrom von bis zu 10kA liegenden Fehlerströmen um eine Verlustzeit von mehr als 10ms länger ist, als die maximal mögliche Auslösezeit des Schutzschalters. Dadurch ist sichergestellt, daß der Versagerschutz erst dann in Funktion tritt, wenn der Schutzschalter tatsächlich versagt hat.

Die mit der Erfindung erzielten Vorteile bestehen insbesondere darin, daß durch einen Versagerschutz mit einem Schmelzleitersystem, deren Schmelzeiter im Passivbetrieb durch Nebenschlußschalter eines Schaltersystems geshuntet sind und im Aktivbetrieb durch gesteuertes Öffnen der Nebenschlußschalter abschmelzen, eine zuverlässige Trennung der Außenleiter eines Versorgungsnetzes auch bei Nichtauslösung des auf Funktionssicherheit überwachten Schutzschalters gewährleistet ist. Dabei kann der Versagerschutz in dem Schutzschalter, beispielsweise in einem FI-Schutzschalter, integriert oder als Zusatzmodul an diesen angebaut sein.

Der Versagerschutz funktioniert vorteilhafterweise unabhängig sowohl von den Bauteilen des Schutzschalters als auch von dessen Anschlußrichtung. Bei vorgeschriebener Anschlußrichtung ist jeweils nur ein Schmelzleiter für jeden Phasenleiter erforderlich. Das Schmelzleitersystem kann bezüglich dessen Abschaltvermögen relativ niedrig dimensioniert werden, da dieses für den Fall, daß der Aktivbetrieb des Versagerschutzes mit hohen Kurzschluß- oder Erdschlußströmen zusammenfällt, durch den sogenannten Back-Up-Schutz der Schaltervorsicherungen geschützt ist.

Die Schmelzleiter des Schmelzleitersystems können vorteilhafterweise in einem gemeinsamen Gehäuse untergebracht werden. Da der Versagerschutz im unwahrscheinlichen Fall des Versagens des Schutzschalters nur einmal aktiv und danach zusammen mit diesem in der Anlage ausgetauscht wird, können sowohl die Nebenschlußschalter als auch die Kurzschlußschalter relativ einfach und kostengünstig aufgebaut sein. Beispielsweise können alle Kontaktsysteme dieser Schalter in einem bistabilen Relais untergebracht werden, das bedingt durch das niedrige Anforderungsprofil für diese Kontakte sehr einfach und kostengünstig ausgebildet sein kann. Aus diesem Grund des nur einmaligen Gebrauchs werden die Kontakte des Schaltersystems zweckmäßigerweise von einem mechanischen Kraftspeicher betätigt, der seinerseits durch den Auslöser aktiviert wird. Der Kraftspeicher muß ebenfalls nur einmal aktiv werden, so daß zweckmäßigerweise vorgespannte Federn zur Betätigung der Kontakte des Schaltersystems eingesetzt werden.

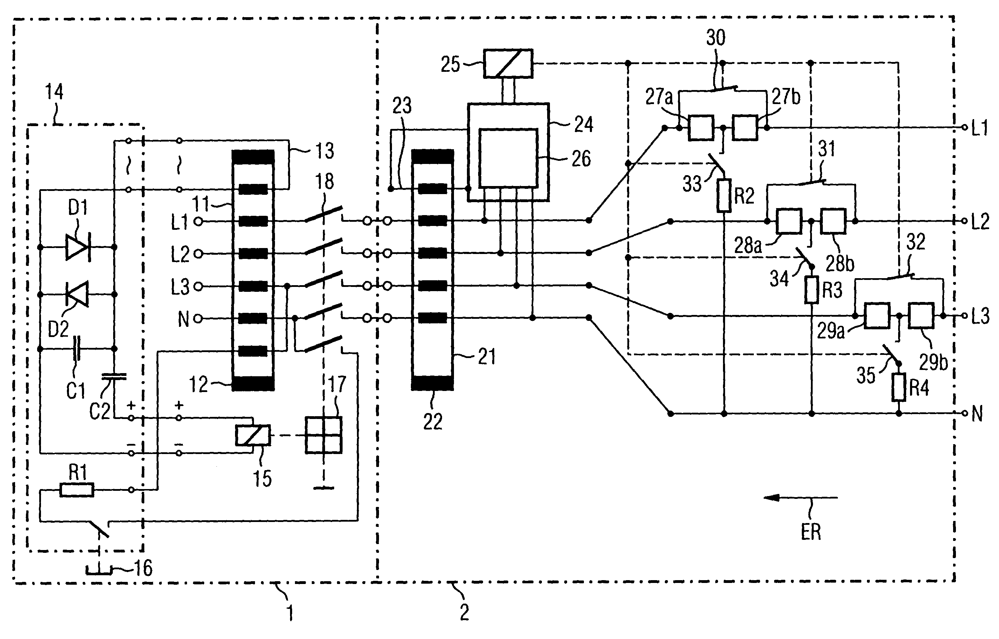

Nachfolgend wird ein Ausführungsbeispiel der Erfindung anhand einer Zeichnung näher erläutert. Darin zeigt die einzige Figur einen Fehlerstrom-Schutzschalter mit zugeordnetem Versagerschutz.

Die Figur zeigt den prinzipiellen Aufbau des FI- oder Fehlerstrom-Schutzschalters 1 als Beispiel für ein Schutzschaltgerät mit einem Summenstromwandler 11, durch dessen primärseitigen Wandlerkern 12 alle stromführenden Phasenleiter oder Außenleiter L1,L2,L3 und ein Nulleiter N eines im Ausführungsbeispiel Vier-Leiternetzes (nachfolgend mit Ln bezeichnet) hindurchgeführt sind. Zur Anpassung ist die Sekundärwicklung 13 des Summenstromwandlers 11 über einen Gleichrichter 14 mit einem Auslöser in Form eines Auslöserelais (Auslöserelaisspule) 15 verbunden.

Der Summenstromwandler 11 mit dessen Sekundärwicklung 13 und der Gleichrichter 14 sowie eine Prüftaste 16, mittels der der Phasenleiter L3 mit dem Nulleiter N zur Simulierung eines Fehlerstroms verbunden werden können, bilden den Auslösekreis des FI-Schutzschalters 1.

Der Auslöser 15 ist mit einem Schaltschloß 17 gekoppelt, daß auf in jeder Phasenleitung L1,L2,L3 und im Nulleiter N des Leiternetzes Ln liegende Kontakte oder Schaltstrecken eines Schutzschalters 18 wirkt. Die Anpassung des Summenstromwandlers 11 an das Auslöserelais 15 ist im Ausführungsbeispiel aus zwei antiparallel geschalteten Dioden D1,D2 (Überspannungsschutz) sowie Kondensatoren C1,C2 aufgebaut. Die Prüftaste 16 ist über einen Widerstand R1 an den Phasenleiter L3 des Leiternetzes Ln angeschlossen.

Der dem FI-Schutzschalter 1 zugeordnete Versagerschutz 2 dient als 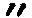 Fail-Safe-Einrichtung" und ist prinzipiell für jede Art von Schutzschaltgerät einsetzbar. Dazu umfaßt der Versagerschutz 2 ebenfalls einen Summenstromwandler 21, durch dessen Wandlerkern 22 ebenfalls die Phasenleiter L1,L2,L3 und der Nulleiter N des Leiternetzes Ln hindurchgeführt sind. Die Sekundärwicklung 23 des Summenstromwandlers 22 ist mit einem separaten Auslösekreis 24 verbunden, der seinerseits einen Auslöser 25, z. B. in Form eines bistabilen Relais, ansteuert.

Im Ausführungsbeispiel ist der Auslösekreis 24 des Versagerschutzes 2 netzspannungsabhängig ausgeführt und umfaßt dazu ein mit dem Leiternetzes Ln verbundenes Netzteil 26. Der Auslösekreis 24 kann jedoch auch als Speicherlösung netzspannungsunabhängig ausgeführt sein.

In der dargestellten netzseitigen Einspeiserichtung ER ist der Versagerschutz 2 dem FI-Schutzschalter 1 vorgeschaltet. Die Anschlußrichtung kann jedoch auch umgekehrt sein, so daß dann der Versagerschutz 2 dem Fehlerstrom-Schutzschalter 1 nachgeschaltet ist.

Der Versagerschutz 2 umfaßt ein Schmelzleitersystem mit in jedem Phasenleiter L1,L2,L3 des Leiternetzes Ln zwei Schmelzleitern 27a,27b,28a,28b bzw. 29a,29b. Den Schmelzleitern 27 bis 29 ist jeweils ein Nebenschlußschalter 30,31,32 parallelgeschaltet. Die Kontakte der Nebenschlußschalter 30,31,32 führen im Passivbetrieb die Nennströme und die durch den FI-Schutzschalter 1 fließenden Kurzschlußströme. Im Aktivbetrieb öffnen sie - bedingt durch die zu diesem Zeitpunkt intakten Schmelzleiter 27 bis 29 - nahezu schaltleistungslos, so daß die Schmelzleiter 27 bis 29 die Abschaltung der Phasenleiter L1 bis L3 vom Leiternetz Ln übernehmen. Das Öffnen der Nebenschlußschalter 30 bis 32 erfolgt mittels des mit diesem gekoppelten Auslösers 25, der seinerseits im Falle eines Fehlerstroms und Versagen des FI-Schutzschalters 1 vom Auslösekreis 24 angesteuert wird.

Das Abschmelzen der Schmelzleiter 27 bis 29 wird unabhängig von den fließenden Last- und Fehlerströmen durch Schließen von Hilfs- oder Kurzschlußschaltern 33,34,35 sichergestellt. Dazu sind diese Kurzschlußschalter 33 bis 35 jeweils über einen Widerstand R2,R3,R4 vom jeweiligen Phasenleiter L1,L2 bzw. L3 mit dem Nulleiter N verbunden. Der jeweils andere Schalterkontakt des Kurzschlußschalters 33 bis 35 ist zwischen den entsprechenden Schmelzleitern 27a,27b und 28a,28b bzw. 29a,29b an den jeweiligen Phasenleiter L1,L2 bzw. L3 angeschlossen. Dadurch ist ein Versagerschutz unabhängig von der Anschlußrichtung des FI-Schutzschalters 1 sichergestellt, da sowohl in als auch entgegen der dargestellten Einspeiserichtung ER stets mindestens ein Schmelzleiter 27 bis 29 im jeweiligen Phasenleiter L1,L2,L3 vor dem Kurzschlußschalter 33,34 bzw. 35 liegt.

Der bei geschlossenen Kurzschlußschaltern 33 bis 35 über diese abfließende Laststrom wird durch Widerstände R2 bis R4 definiert begrenzt. Die Widerstände R2 bis R4 können auch als Kurzschlußleiter ausgeführt sein. Die Nebenschlußschalter 30 bis 32 und die Kurzschlußschalter 33 bis 35 bilden das vom Auslösekreis 24 angesteuerte Schaltersystem des Versagerschutzes 2.

Um zu gewährleisten, daß die Schmelzleiter 27 bis 29 im Aktivbetrieb des Versagerschutzes 2 stets vor den Kurzschlußvorsicherungen des FI-Schutzschalters 1 abschmelzen, sind jene für einen Nennstrom dimensioniert, der kleiner als der Nennstrom des FI-Schutzschalters 1 ist. Um dabei sicherzustellen, daß der Versagerschutz 2 erst dann eingreift, wenn der FI-Schutzschalter 1 tatsächlich versagt hat, wird die Auslösezeit des Auslösekreises 24 höher eingestellt als die Auslösezeit des Auslösekreises des FI-Schutzschalters 1. Dabei wird die Auslösezeit des Auslösekreises 24 derart bemessen, daß diese im Bereich zwischen einer Auslöseschwelle und einem Fehlerstrom von z.B. 10kA um eine Verzugszeit von mehr als 10ms länger ist als die maximal mögliche Auslösezeit des FI-Schutzschalters 1.

## Patentansprüche

1. Versagerschutz für ein Schutzschaltgerät (1), mit einem Schmelzleitersystem mit mindestens einem Schmelzleiter (27 bis 28) in jedem Phasenleiter (L1,L2,L3) eines vom Schutzschaltgerät (1) überwachten Leiternetzes (Ln), und mit einem von einem mit dem Leiternetz (Ln) gekoppelten Auslöser (25) gesteuerten Schaltersystem (30 bis 35) mit einem Nebenschlußschalter (30,31,32) für den Schmelzleiter (27 bis 29) jedes Phasenleiters (L1,L2,L3).

2. Versagerschutz nach Anspruch 1, **dadurch gekennzeichnet,** daß das Schaltersystem (30 bis 35) für jeden Phasenleiter (L1,L2,L3) einen Kurzschlußschalter (33,34,35) aufweist, der in Einspeiserichtung (ER) des Leiternetzes (Ln) hinter dem Schmelzleiter (27 bis 29) an den Phasenleiter (L1,L2,L3) angeschlossen ist.

3. Versagerschutz nach Anspruch 2, **dadurch gekennzeichnet,** daß der oder jeder Kurzschlußschalter (33,34,35) über einen Widerstand (R2,R3,R4) an den Nullleiter (N) des Leiternetzes (Ln) angeschlossen ist.

4. Versagerschutz nach Anspruch 3, **dadurch gekennzeichnet,** daß der oder jeder Widerstand (R2,R3,R4) ein Kurzschlußleiter ist.

5. Versagerschutz nach einem der Ansprüche 1 bis 4, **dadurch gekennzeichnet,** daß jedem Nebenschlußschalter (30,31,32) zwei Schmelzleiter (27 bis 29) zugeordnet sind, wobei der jeweilige Kurzschlußschalter (33,34,35) zwischen den beiden Schmelzleitern (27a,27b,28a,28b,29a,29b) an den Phasenleiter (L1,L2,L3) angeschlossen ist.

6. Versagerschutz nach einem der Ansprüche 1 bis 5, **dadurch gekennzeichnet,** daß der Auslöser (25) von einem separaten Auslösekreis (24) mit einem Summenstromwandler (21) angesteuert ist.

7. Versagerschutz nach Anspruch 6, **dadurch gekennzeichnet,** daß der Auslösekreis (24) ein mit dem Leiternetz (Ln) verbundenes Netzteil (26) umfaßt.

8. Schutzschaltgerät, insbesondere Fehlerstrom- oder Differenzstrom-Schutzschalter, mit einem Versagerschutz (2) nach einem der Ansprüche 1 bis 7.
